# EUROPÄISCHE PATENTSCHRIFT

(11) **EP 0 364 687 B1**
(45) Veröffentlichungstag und Bekanntmachung des Hinweises auf die Patenterteilung: **26.05.1993**
(21) Anmeldenummer: 89115038.5
(22) Anmeldetag: 15.08.1989
(51) Int. Cl.: G01N 1/02, G01N 30/00, G01N 1/22

(54) **Vorrichtung zur Probennahme für Überwachungsfahrzeuge**
Sampling device for survey vehicles
Dispositif de prise d'échantillons pour véhicule de surveillance

(30) Priorität: 15.10.1988 DE 3835207
(43) Veröffentlichungstag der Anmeldung: 25.04.1990
(73) Patentinhaber: Bruker-Franzen Analytik GmbH, D-28359 Bremen (DE)
(72) Erfinder: Koch, Dieter, Dr., D-2803 Weyhe-Leeste (DE); Baum, Hans-Jakob, D-2807 Achim-Uesen (DE)
(74) Vertreter: KOHLER SCHMID + PARTNER

(56) Entgegenhaltungen:
- DE-A- 3 137 765
- DE-A- 3 624 365
- US-A- 4 056 969
- PROSPEKT FOX NBC 1000, Juni 1988, Thyssen Henschel, Kassel, DE

## Beschreibung

Die Erfindung betrifft eine Vorrichtung zur Probennahme für Überwachungsfahrzeuge, mit einem eine Kontaktfläche aufweisenden beweglichen Sammelkörper, dem Eingangskopf eines Analysegerätes, einer Einrichtung zum Absenken und Anheben des Sammelkörpers, mit der der Sammelkörper mit seiner Kontaktfläche wahlweise an dem das Fahrzeug tragenden Boden oder an dem Eingangskopf zur Anlage bringbar ist, und mit Mitteln zum Auswechseln des Sammelkörpers.

Das Prinzip, Proben mittels eines Sammelkörpers zu nehmen und an den Eingangskopf eines Analysegerätes heranzuführen, ist beispielsweise aus der DE-OS 31 37 765 bekannt. Der Sammelkörper besteht dabei aus einer Scheibe aus Silikonkautschuk, die bei Umgebungstemperatur gute Sorbtions-Eigenschaften hat, um von Körpern, mit denen sie in Kontakt gebracht wird, an deren Oberfläche haftende Substanzen zu übernehmen. Die dabei aufgenommenen Substanzen können für vielerlei Untersuchungen von Interesse sein, beispielsweise in der Umweltanalytik, Rückstands- und Lebensmittelanalytik, Prozeß- und Qualitätskontrolle, in der medizinisch-klinischen Analytik, Toxikolgie, Mikrobiologie, Versuchstierkunde, Pharmakologie, Doping-Kontrolle, Kriminaltechnik und Gerichtsmedizin. Der Eingangskopf des Analysegerätes weist eine beheizbare, mit einem Trägergas hinterspülte Membran auf, die bei einem Kontakt mit der Sammelscheibe die von dieser aufgenommenen Substanzen zum Verdampfen bringt, so daß sie die Kontaktmembran des Eingangskopfes durchdringen und von dem die Membran hinterspülenden Trägergas dem Analysegerät zugeführt werden. Bei dem Analysegerät kann es sich um einen Gaschromatographen, ein Massenspektrometer oder eine GC/MS-Kombination handeln.

Das aus der DE-OS 31 37 765 bekannte Gerät ist dazu bestimmt, Proben von Hand zu nehmen, indem die Sammelscheibe mit ihrer Kontaktfläche zunächst mit dem Gegenstand in Berührung gebracht wird, dessen Verunreinigung untersucht werden soll, und dann mit dem Eingangskopf des Analysegerätes. Insoweit ist dieses Gerät nur für den stationären Betrieb geeignet. Es besteht jedoch ein Bedarf, große Gebiete auf Verunreinigungen zu untersuchen, die nur unter Verwendung eines Überwachungsfahrzeuges erfaßt werden konnen. Ein solches Überwachungsfahrzeug ist beispielsweise der gepanzerte Geländewagen "Fuchs", der in dem Prospekt FOX NBC 1006/88 E H O der Firma Thyssen Henschel in D-3500 Kassel beschrieben und dargestellt ist. Dieses Fahrzeug weist an seinem hinteren Ende Arme auf, die an ihren Enden Räder tragen, die ihrerseits mit Silikonkautschuk-Reifen versehen sind und wahlweise auf den vom Fahrzeug überfahrenen Boden absenkbar und an den an der Rückseite des Fahrzeuges angebrachten Eingangskopf des Analysegerätes anlegbar sind. Es sind zwei solcher Arme mit Rädern vorhanden, damit jeweils der von einem Rad gebildete Sammelkörper Verunreinigungen von dem überfahrenen Boden aufnehmen kann, während die von dem anderen Sammelkorper aufgenommenen Substanzen von dem Eingangskopf übernommen werden. Bevor der Arm, der zuletzt am Eingangskopf anlag, wieder auf den Boden abgesenkt wird, muß das als Sammelkörper dienende Rad ausgewechselt werden, damit sichergestellt ist, daß die bei der nächsten Kontaktierung des Eingangskopfes übernommenen Verunreinigungen auch wirklich von dem zuletzt überfahrenen Streckenabschnitt stammen. Das Auswechseln der Räder muß mit Hilfe von gegenüber der Fahrzeugwand abgedichteten Handschuhen vom Inneren des Fahrzeuges aus manuell erfolgen. Die bekannte Vorrichtung ist daher nicht nur kompliziert in ihrem Aufbau, sondern auch schwierig zu handhaben und erfordert vor allem einen ständigen Personal-Einsatz.

Demgegenüber liegt der Erfindung die Aufgabe zugrunde, eine Vorrichtung der eingangs genannten Art so auszubilden, daß sie mit hoher Betriebssicherheit arbeitet und weitgehend automatisch betrieben werden kann.

Diese Aufgabe wird nach der Erfindung dadurch gelöst, daß der Sammelkörper von dem Abschnitt eines strangförmigen Materials gebildet wird, die Einrichtung zum Absenken und Anheben des Samelkörpers wenigstens zwei im Abstand voneinander angeordnete, erste und zweite Führungs- und Transportmittel aufweist, zwischen denen das strangförmige Material im wesentlichen gestreckt gehalten ist und die es erlauben, das strangförmige Material durch Verschieben in seiner Längsrichtung wahlweise in eine erste Stellung zu bringen, in der ein Endabschnitt dieses Materials von dem ersten Führungs- und Transportmittel herabhängt und mit seiner Kontaktfläche auf dem Boden aufliegt, und in eine zweite Stellung, in der die mit dem Boden in Berührung kommende Kontaktfläche des Endabschnittes dem Eingangskopf gegenübersteht, und die Mittel zum Auswechseln des Sammelkörpers eine Schneideinrichtung zum Abtrennen des zuletzt benutzten Endabschnittes des strangförmigen Materials umfassen.

Bei der erfindungsgemäßen Vorrichtung werden also keine Räder verwendet, die an ihrem Umfang einen Sammelkörper in Form eines Reifens tragen, sondern man läßt einfach den Endbschnitt eines strangförmigen Materials über den Boden schleifen, so daß er von dort Verunreinigungen aufnehmen kann. Dieser Endabschnitt des strangförmigen Materials läßt sich einfach durch Ausfahren aus dem Fahrzeug bis auf den Boden absenken und durch entsprechendes Einfahren auch wieder abheben und dadurch in den Bereich des Eingangskopfes des Analysegerätes bringen. Dabei müssen selbstverständlich die Anordnung der Führungs- und Transportmittel, des Eingangskopfes des Analysegerätes und die Länge der Strecke, um die das strangförmige Material hin- und herbewegt werden muß, in der Weise gewählt sein, daß eine sichere Berührung des Bodens mit dem Endabschnitt des strangförmigen Materials stattfindet und dieser Endabschnitt dann auch in den Bereich des Eingangskopfes gebracht wird, ohne daß eine Kontaminierung in der Umgebung des Eingangskopfes oder auch von Abschnitten des strangförmigen Materials stattfindet, die später wieder zum Einsammeln von Proben benutzt werden sollen. In dieser Hinsicht ist es von besonderem Vorteil, daß durch die Verwendung zweier im Abstand voneinander angeordneter Führungs- und Transportmittel das strangförmige Material immer straff gehalten werden kann, damit es mit anderen Bauteilen des Fahrzeuges nicht in Berührung kommt, und es ist durch einfaches Abtrennen des zuletzt benutzten und gegebenenfalls kontaminierten Endabschnittes des strangförmigen Materials gewährleistet, daß jede Probenahme mit einem frischen Sammelkörper erfolgt, ohne daß hierfür schwierige Manipulationen außerhalb des Fahrzeugs vorgenommen werden müßten. Vielmehr kann die Schneideinrichtung ebenso wie die Führungs- und Transportmittel völlig automatisch betätigt werden, so daß die Vorrichtung ohne personellen Einsatz arbeiten kann.

Bei einer bevorzugten Ausführungsform der Erfindung ist der Eingangskopf im Bereich zwischen den beiden Führungs- und Transportmittel angeordnet. In diesem Bereich hat das strangförmige Material einen definierten Verlauf und nimmt demgemäß auch gegenüber dem Eingangskopf eine definierte Lage ein, so daß auch eine einwandfreie Übergabe von aufgenommenen Substanzen an den Eingangskopf gewährleistet ist. Diese Übergabe kann noch dadurch verbessert werden, daß dem Eingangskopf ein quer zur Längsrichtung des strangförmigen Materials bewegliches Andruckglied gegenübersteht und das strangförmige Material zwischen dem Eingangskopf und dem Andruckglied hindurchgeführt ist. Es ist dann ohne weiteres möglich, durch Betätigen des Andruckgliedes einen innigen Kontakt zwischen dem strangförmigen Material und dem Eingangskopf herzustellen, der eine im wesentlichen vollständige Übernahme der Stoffe, die von der Kontaktfläche des strangförmigen Sammelkörpers aufgenommen worden sind, an den Eingangskopf gewährleistet.

Bei einer bevorzugten Ausführungsform der Erfindung wird das erste Führungs- und Transportmittel von zwei das strangförmige Material zwischen sich einschließenden Walzen, von denen mindestens eine angetrieben ist, und das zweite Führungs- und Transportmittel von einer Vorratstrommel für das strangförmige Material gebildet. Die das erste Führungs- und Transportmittel bildenden Walzen gewährleisten eine sehr genaue Führung des strangförmigen Materials und sind zugleich dazu geeignet, das strangförmige Material um genau definierte Strecken vorzuschieben und zurückzuziehen. Dabei kann die Vorratstrommel im Sinne eines Straff-Haltens des strangförmigen Materials angetrieben sein. Ein solches Straff-Halten begünstigt eine im übrigen berührungsfreie, definierte Lage des strangförmigen Materials im Bereich zwischen den beiden Führungs- und Transportmitteln und erlaubt doch ein seitliches Auslenken, wenn das strangförmige Material mittels eines Andruckgliedes an den seitlich neben dem Strang angeordneten Eingangskopf angedrückt werden soll.

Die Gefahr, daß von dem strangförmigen Material aufgenommene Verunreinigungen auf das erste Führungs- und Transportmittel, also insbesondere die Walzen, übertragen werden können, die dann später zu einer Verfälschung der Messung führen könnten, ist außerordentlich gering, insbesondere wenn das erste Führungs- und Transportmittel aus Stahl besteht, weil die Affinität von Stahl gegenüber den vom strangförmigen Sammelkörper sorbierten Substanzen vernachlässigbar klein ist. Sollte trotzdem eine gewisse Verfälschung der Messungen zu befürchten sein, besteht ohne weiteres die Möglichkeit, einen Abschnitt noch frischen strangförmigen Materials durch das erste Führungs-und Transportmittel hindurchzuführen, so daß es daran anhaftende Verunreinigungen aufnimmt, und diesen Abschnitt durch Abschneiden zu entfernen, bevor weiteres Material bis zum Boden hinabgelassen wird.

Die Lage der ersten und zweiten Führungs- und Transportmittel zueinander ist an sich beliebig, weil es für den Kontakt des strangförmigen Materials mit dem Boden ausreicht, wenn dieses Material unter dem Einfluß der Schwerkraft von dem ersten Führungs- und Transportmittel herabhängen kann. Aus Gründen der Platzersparnis wird jedoch in vielen Fällen die Anordnung der ersten und zweiten Führungs- und Transportmittel senkrecht übereinander geboten sein.

Um die Umgebung des Eingangskopfes des Analysegerätes von einer unkontrollierten Kontaminierung freizuhalten, ist es besonders vorteilhaft, die Bauteile der erfindungsgemäßen Vorrichtung in einem unter Überdruck stehenden Gehäuse unterzubringen, das eine Bodenplatte mit einer Austrittsöffnung für das strangförmige Material aufweist. Die ersten Führungs- und Transportmittel werden dann zweckmäßig neben diese Austrittsöffnung in solcher Weise angeordnet, daß sie diese Austrittsöffnung im wesentlichen verschließen, so daß der Verlust des durch diese Öffnung austretenden Gases aus dem unter Überdruck stehenden Gehäuse relativ klein bleibt. Auch in dieser Hinsicht ist die Anwendung zweier paralleler Walzen als erstes Führungs- und Transportmittel besonders vorteilhaft.

Während es bei der eingangs beschriebenen bekannten Vorrichtung erhebliche Schwierigkeiten bereitet, die gegenüber dem Eingangskopf seitlich versetzt angeordneten Arme so zu führen, daß die daran angebrachten Räder an der Stirnfläche des Eingangskopfes mit der notwendigen Genauigkeit zur Anlage kommen, ist es bei der erfindungsgemäßen Vorrichtung sehr leicht, abwechselnd zwei verschiedene Sammelkörper mit dem Eingangskopf in Eingriff zu bringen. Dazu genügt es, die Vorrichtung mit mindestens das strangförmige Material und die dazugehörigen Führungs- und Transportmittel umfassenden Einrichtungen vorzusehen und den Eingangskopf so zu lagern, daß er wahlweise auf das eine oder das andere der beiden strangförmigen Materialien ausrichtbar ist. Wenn das strangförmige Material in der beschriebenen Weise geradlinig geführt und mittels eines Andruckgliedes an den Eingangskopf anlegbar ist, so genügt es, den Eingangskopf zwischen zwei definierten Winkelstellungen um eine zu den geführten Strängen des Materials parallele Achse hin- und herzuschwenken, um ihn abwechselnd genau auf den einen oder den anderen Strang auszurichten. Es könnte aber auch eine Parallelverschiebung des Eingangskopfes vorgenommen werden, wenn es darauf ankommt, daß der Eingangskopf in Bezug auf jeden der beiden Stränge die gleiche Winkellage einnimmt. Das kann dann von Bedeutung sein, wenn ein strangförmiges Material mit rechteckigem Querschnitt, also ein Bandmaterial, Verwendung findet. Vorzugsweise wird jedoch das strangförmige Material von einem Schlauch gebildet, weil ein Schlauch in Bezug auf seine Querschnittsrichtung unabhängig ist und sowohl einerseits eine hohe Flexiblität als auch anderseits eine gewisse Steifigkeit und Festigkeit aufweist. Besonders ein Schlauch ist dazugeeignet, auch in unwegsamem Gelände einen guten Bodenkontakt herzustellen, ohne gegen Beschädigungen empfindlich zu sein, und zum Zweck des Führens und Transportierens wie auch zur Anlage an den Eingangskopf abgeflacht werden kann, so daß sich hier in jedem Fall definierte Verhältnisse einstellen.

Die Erfindung wird im folgenden an Hand des in der Zeichnung dargestellten Ausführungsbeispieles näher beschrieben und erläutert. Die der Beschreibung und der Zeichnung zu entnehmenden Merkmale können bei anderen Ausführungsformen der Erfindung jeweils einzeln für sich oder zu mehreren in beliebiger Kombination Anwendung finden. Es zeigen:
- Fig. 1: einen Längsschnitt durch den hinteren Abschnitt eines Überwachungsfahrzeuges mit einer nach der Erfindung ausgebildeten Vorrichtung zur Probennahme in schematischer Darstellung und

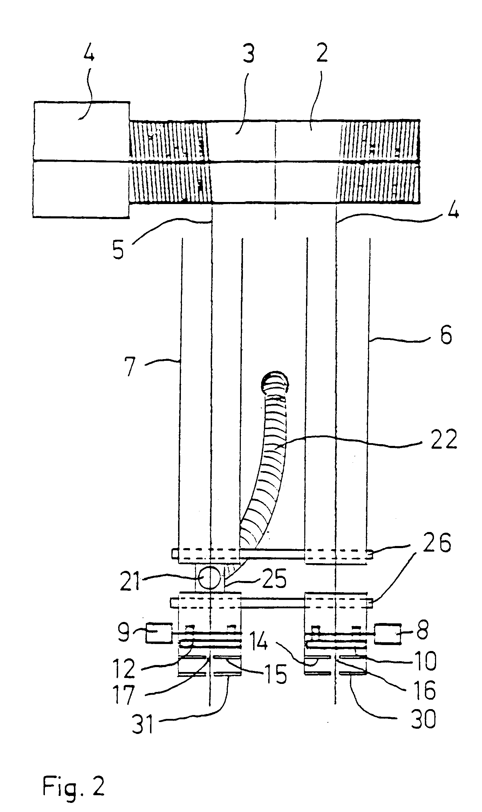

- Fig. 2: einen Schnitt längs der Linie II/II durch die Anordnung nach Fig. 1.

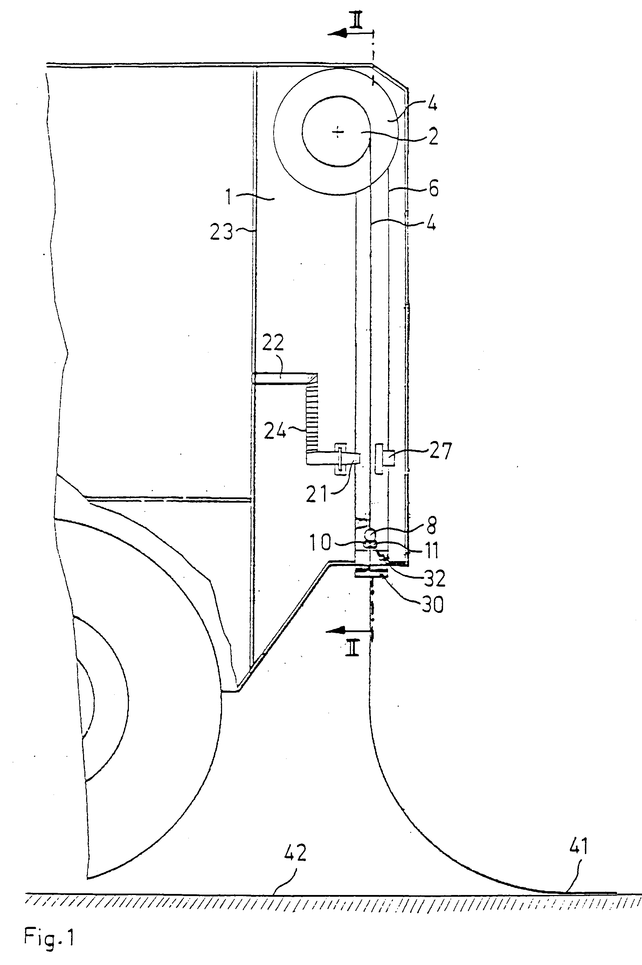

Bei dem in der Zeichnung dargestellten Ausführungsbeispiel befindet sich am hinteren Ende eines Überwachungsfahrzeuges ein Abteil 1, an dessen oberem Ende auf einer horizontalen Achse zwei Trommeln 2 und 3 gelagert sind, die mit einer gemeinsamen Antriebseinheit 4 gekoppelt sind. Auf jeder der Trommeln 2 und 3 ist ein aus Silikongummi bestehender oder mit Silikongummi beschichteter Schlauch 4 bzw. 5 aufgewickelt. Das freie Ende jedes Schlauches erstreckt sich senkrecht nach unten durch ein ihn umgebendes Rohr 6 bzw. 7 bis zu einem mit einem Antrieb 8 bzw. 9 versehenen Walzenpaar 10, 11 bzw. 12, zwischen dessen Walzen der Schlauch 4 bzw. 5 hindurchgeführt ist, wie es Fig. 1 für das Walzenpaar 10, 11 zeigt. Die Walzenpaare 10, 11 bzw. 12 befinden sich unmittelbar über einer das Rohr 6 bzw. 7 abschließenden Bodenplatte 14 bzw. 15, die eine öffnung 16 bzw. 17 für den Durchtritt des Schlauches 4 bzw. 5 aufweist. Die Walzenpaare sind den Öffnungen in den Bodenplatten 14, 15 dicht benachbart, so daß hier nur enge Spalte vorhanden sind, die einen nur geringen Luftstrom passieren lassen. Daher kann das von dem Abteil 1 gebildete, gegenüber dem Innenraum des Fahrzeuges gasdichte Gehäuse unter Überdruck gehalten werden, durch den verhindert wird, daß kontaminierte Luft in das Abteil eindringt und die Funktion der innerhalb des Abteils 1 angeordneten Bauteile der Vorrichtung stört.

Innerhalb des Gehäuses befindet sich weiter der Eingangskopf 21 eines Analysegerätes, das sich in nicht näher dargestellter Weise innerhalb des Überwachungsfahrzeuges befindet und mit dem der Eingangskopf 21 durch eine Leitung 22 verbunden ist, die durch die das Abteil 1 von dem Fahrzeuginneren trennende Wand 23 dicht hindurchgeführt ist. Diese Leitung 22 enthält einen flexiblen Abschnitt 24, der eine Bewegung des Eingangskopfes 21 zuläßt. Dieser Eingangskopf 21 ist an einem Schlitten 25 befestigt, der in zwei horizontal angeordneten Schienen 26 geführt ist, die sich dicht oberhalb der Walzenpaare 10, 11 bzw. 12 befinden. Der in den Schienen 26 geführte Schlitten 25 ermöglicht es, den Eingangskopf 21 wahlweise dem einen oder dem anderen der beiden Schläuche 4, 5 gegenüberzustellen. An der dem Eingangskopf 21 gegenüberliegenden Seite jedes Schlauches befindet sich jeweils ein Andruckglied 27, das in Richtung auf den gegenüberstehenden Eingangskopf 21 bewegbar ist und daher die Möglichkeit bietet, den jeweiligen Schlauch an den benachbarten Eingangskopf 21 anzupressen.

Mit Abstand unterhalb der jeweiligen Bodenplatte 14 bzw. 15 befindet sich eine Schneideinrichtung 30 bzw. 31, die es gestattet, den aus dem Abteil 1 nach unten heraushängenden Schlauchabschnitt abzuschneiden. Die Schneideinrichtungen 30, 31 bilden weiterhin einen weiteren Abschluß des Rohres 6 bzw. 7 nach unten, durch den vom Fahrzeug aufgewirbelte grobe Verunreinigungen von der Vorrichtung ferngehalten werden. Der sich an der Schneideinrichtung absetzende Schmutz kann teilweise durch die Bewegung der Schneidblätter abgesprengt oder auch durch eine Hochdruck-Reinigungsdüse abgewaschen werden, die der Schneideinrichtung 30 bzw. 32 benachbart angeordnet ist, wie es in Fig. 1 bezüglich der Schneideinrichtung 30 mit der zugeordneten Hochdruck-Reinigungsdüse 32 dargestellt ist.

Im Betrieb wird den beiden Vorratstrommeln 2 , 3 von der Antriebseinheit 4 ein vorgegebenes Drehmoment im Sinne eines Aufwickelns der Schläuche 6, 7 erteilt, während die Walzenpaare 10, 11 und 12, zwischen denen der Schlauch 6 bzw. 7 fest eingeklemmt ist, dazu dienen, dem Schlauch 4 bzw. 5 eine Axialbewegung zu erteilen oder ihn auch in einer gewählten Position festzuhalten. Das auf die Vorratstrommeln 2, 3 ausgeübte Drehmoment hat zur Wirkung, daß die Schläuche 4 und 5 in den sie mit Abstand umgebendnen Rohren 6, 7 mit einer vorgegebenen Zugspannung straff gehalten werden.

Die mit den Walzenpaaren 10, 11 bzw. 12 verbundenen Antriebe 8 und 9 ermöglichen es demnach, einen Abschnitt 41 des jeweiligen Schlauches auszufahren, bis er auf dem Boden 42 schleift, auf dem sich das Fahrzeug bewegt, wie es in Fig. 1 dargestellt ist. Demgemäß adsorbiert der Abschnitt 41 des Schlauches am Boden vorhandene Verunreinigungen. Nach einer vorgegebenen Fahrstrecke kann durch entsprechenden Antrieb des Walzenpaares 10, 11 der Schlauch 4 wieder so weit eingezogen werden, daß der als Sammelkörper dienende Abschnitt 41 des Schlauches 4 in den Bereich des Eingangskopfes 21 gelangt. Der Abstand des Eingangskopfes 21 von der Vorratstrommel 2 ist so groß, daß ein kontaminierter Abschnitt des Schlauches nicht mit ihr in Berührung kommen kann. Daß der kontaminierte Abschnitt 41 des Schlauches das Walzenpaar 10, 11 passiert, ist von untergeordneter Bedeutung, weil diese Walzen aus einem Material hergestellt sind, insbesondere aus Stahl, das keine Substanzen aufnimmt, die der Schlauchabschnitt 41 adsorbiert hat. Befindet sich dann der Endabschnitt 41 des Schlauches 4 vor dem Probenkopf 21, kann dieser Schlauchabschnitt durch Betätigen des Andruckgliedes 27 gegen den Eingangskopf 21 gepreßt werden, der dann eine Desorption der am Schlauch 4 haftenden Stoffe bewirkt und diese Stoffe zu dem Analysegerät weiterleitet. Bei dem Eingangskopf kann es sich vorzugsweise um einen Kopf mit beheizter und trägergashinterspülter Taktmembran handeln, wie er zur Probenahme für Gaschromatographen, Massenspektrometer und auch Kombinationen solcher Geräte bekannt ist, wie auch das im Fahrzeug angeordnete Analysegerät ein Gaschromatograph, ein Massenspektrometer oder ein GC/MS-System sein kann.

Gleichzeitig mit dem Einfahren des einen Schlauches 4 wird der andere Schlauch 6 ausgefahren, so daß eine ununterbrochene Probenahme gewährleistet ist. Die Intervalle entsprechen bei konstanter Fahrgeschwindigkeit bestimmten Wegstrecken, so daß bei der Untersuchung eines Geländes eine einwandfreie Kartographierung möglich ist. Wenn nach der Übernahme der Substanzen durch den Eingangskopf 21 der jeweilige Schlauch wieder ausgefahren wird, wird der zuvor verwendete Abschnitt 41 des Schlauches, nachdem er das jeweilige Rohr durch die Öffnung in seiner Bodenplatte verlassen hat, mittels der Schneideinrichtung abgetrennt, so daß jeweils ein frischer Schlauchabschnitt am Boden schleift und damit jede Gefahr einer Fehlmessung ausgeschaltet ist. Wenn die Gefahr besteht, daß zu untersuchende Substanzen an dem zugeordneten Walzenpaar haften geblieben sind, genügt es, den Schlauch so weit vorzuschieben, daß ein sauberer Schlauchabschnitt zwischen den Walzen hindurchläuft, der an den Walzen haften gebliebene Stoffe wieder abnimmt und der dann zusammen mit dem verbrauchten Abschnitt des Schlauches abgetrennt wird.

Es es ersichtlich, daß die Verwendung eines strangförmigen Materials, wie des beschriebenen Schlauches, die Möglichkeit bietet, ohne manuelle Eingriffe die Oberfläche des Bodens nach interessierenden Substanzen abzutasten und diese Substanzen zu analysieren. Dabei können automatische Registriereinrichtungen dazu dienen, Aufzeichnungen über kontaminierte und freie Geländebereiche zu machen.

Es versteht sich, daß die Erfindung nicht auf das dargestellte Ausführungsbeispiel beschränkt ist, sondern Abweichungen davon möglich sind, ohne den Rahmen der Erfindung zu verlassen. Dies gilt für die spezielle Ausbildung der von den Vorratstrommeln und den Walzenpaaren gebildeten Transportmittel, für die spezielle Anordnung und Lagerung des Eingangskopfes, die Ausbildung und Anordnung der Schneideinrichtung, die Anordnung von Reinigungsdüsen und so weiter. Auch bestünde beispielsweise die Möglichkeit, die Anordnung statt mit senkrecht übereinander liegenden mit waagerecht nebeneinander liegenden Transportmitteln auszubilden.

## Patentansprüche

1. Vorrichtung zur Probennahme für Überwachungsfahrzeuge, mit einem eine Kontaktfläche aufweisenden beweglichen Sammelkörper, mit einem Eingangskopf eines Analysegerätes, mit einer Einrichtung zum Absenken und Anheben des Sammelkörpers, mittels der der Sammelkörper mit seiner Kontaktfläche wahlweise an dem das Fahrzeug tragenden Boden oder an dem Eingangskopf zur Anlage bringbar ist, und mit Mitteln zum Auswechseln des Sammelkörpers,
dadurch gekennzeichnet, daß
der Sammelkörper von dem Abschnitt (41) eines strangförmigen Materials (4) gebildet wird, die Einrichtung zum Absenken und Anheben des Sammelkörpers wenigstens zwei im Abstand voneinander angeordnete, erste und zweite Führungs- und Transportmittel (10,11; 2) aufweist, zwischen denen das strangförmige Material (4) im wesentlichen gestreckt gehalten ist und die es erlauben, das strangförmige Material durch Verschieben in seiner Längsrichtung wahlweise in eine erste Stellung zu bringen, in der ein Endabschnitt (41) dieses Materials von dem ersten Führungs-und Transportmittel (10,11) herabhängt und mit seiner Kontaktfläche auf dem Boden (42) aufliegt, und in eine zweite Stellung, in der die mit dem Boden in Berührung gekommene Kontaktfläche des Endabschnittes dem Eingangskopf (21) gegenübersteht, und die Mittel zum Auswechseln des Sammelkörpers eine Schneideinrichtung (30) zum Abtrennen des zuletzt benutzten Endabschnittes (41) des strangförmigen Materials (4) umfassen.

2. Vorrichtung nach Anspruch 1, dadurch gekennzeichnet, daß der Eingangskopf (21) im Bereich zwischen den beiden Führungs- und Transportmitteln (10,11; 2) angeordnet ist.

3. Vorrichtung nach Anspruch 1 oder 2, dadurch gekennzeichnet, daß dem Eingangskopf (21) ein quer zur Längsrichtung des strangförmigen Materials (4) bewegliches Andruckglied (27) gegenübersteht und das strangförmige Material (4) zwischen dem Eingangskopf (21) und dem Andruckglied (27) hindurchgeführt ist.

4. Vorrichtung nach einem der vorhergehenden Ansprüche, dadurch gekennzeichnet, daß das erste Führungs- und Transportmittel von zwei das strangförmige Material (4) zwischen sich einschließenden Walzen (10, 11), von denen mindestens eine angetrieben ist, und das zweite Führungs-und Transportmittel von einer Vorratstrommel (2) für das strangförmige Material (4) gebildet wird.

5. Vorrichtung nach Anspruch 4, dadurch gekennzeichnet, daß die Vorratstrommel (2) im Sinne eines Straff-Haltens des strangförmigen Materials (4) angetrieben ist.

6. Vorrichtung nach einem der vorhergehenden Ansprüche, dadurch gekennzeichnet, daß wenigstens die ersten Führungs-und Transportmittel (10, 11) aus Stahl bestehen.

7. Vorrichtung nach einem der vorhergehenden Ansprüche, dadurch gekennzeichnet, daß die ersten und zweiten Führungs-und Transportmittel (10, 11; 2) im wesentlichen senkrecht übereinander angeordnet sind.

8. Vorrichtung nach einem der vorhergenden Ansprüche, dadurch gekennzeichnet, daß sich ihre Bauteile in einem unter Überdruck stehenden Gehäuse (1) befinden, das eine Bodenplatte (14) mit einer Austrittsöffnung (16) für das strangförmige Material (4) aufweist, und daß die ersten Führungs- und Transportmittel (10, 11) unmittelbar neben dieser Austrittsöffnung (16) angeordnet sind.

9. Vorrichtung nach einem der vorhergehenden Ansprüche, dadurch gekennzeichnet, daß sie mindestens zwei das strangförmige Material (4, 5) und die dazugehörigen Führungs-und Transportmittel umfassende Einrichtungen aufweist und der Eingangskopf (21) wahlweise auf das eine oder das andere der beiden strangförmigen Materialien (4, 6) ausrichtbar ist.

10. Vorrichtung nach einem der vorhergehenden Ansprüche, dadurch gekennzeichnet, daß das strangförmige Material (4) von einem Schlauch gebildet wird.

## Claims

1. Sampling appliance for monitor vehicles, with a movable collecting body having a contact face, with an inlet head of an analyser, with a device for lowering and raising the collecting body, by means of which the collecting body can be brought to bear with its contact face selectively against the ground carrying the vehicle or against the inlet head, and with means for exchanging the collecting body, characterised in that the collecting body is formed by the portion (41) of a strand-like material (4), the device for lowering and raising the collecting body has at least two first and second guide and transport means (10, 11; 2) which are arranged at a distance from one another and between which the strand-like material (4) is held essentially stretched and which make it possible selectively to bring the strand-like material, by displacement in its longitudinal direction, into a first position, in which an end portion (41) of this material hangs down from the first guide and transport means (10, 11) and rests with its contact face on the ground (42), and into a second position, in which the contact face of the end portion which has come into contact with the ground is located opposite the inlet head (21), and the means for exchanging the collecting body comprise a cutting device (30) for severing the last-used end portion (41) of the strand-like material (4).

2. Appliance according to Claim 1, characterised in that the inlet head (21) is arranged in the region between the two guide and transport means (10, 11; 2).

3. Appliance according to Claim 1 or 2, characterised in that a press-down member (27) movable transversely to the longitudinal direction of the strand-like material (4) is located opposite the inlet head (21), and the strand-like material (4) is guided through between the inlet head (21) and the press-down member (27).

4. Appliance according to one of the preceding claims, characterised in that the first guide and transport means is formed by two rollers (10, 11) which include the strand-like material (4) between them and at least one of which is driven, and the second guide and transport means is formed by a supply reel (2) for the strand-like material (4).

5. Appliance according to Claim 4, characterised in that the supply reel (2) is driven with the effect of keeping the strand-like material (4) taut.

6. Appliance according to one of the preceding claims, characterised in that at least the first guide and transport means (10, 11) consist of steel.

7. Appliance according to one of the preceding claims, characterised in that the first and second guide and transport means (10, 11; 2) are arranged essentially vertically one above the other.

8. Appliance according to one of the preceding claims, characterised in that its components are located in a housing (1) which is under overpressure and which has a baseplate (14) with an exit orifice (16) for the strand-like material (4), and in that the first guide and transport means (10, 11) are arranged directly next to this exit orifice (16).

9. Appliance according to one of the preceding claims, characterised in that it has at least two devices comprising the strand-like material (4, 5) and the associated guide and transport means, and in that the inlet head (21) can be aligned selectively with one or other of the two strand-like materials (4, 6).

10. Appliance according to one of the preceding claims, characterised in that the strand-like material (4) is formed by a hose.

## Revendications

1. Dispositif pour le prélèvement d'échantillons pour des véhicules de surveillance, avec un organe collecteur mobile présentant une surface de contact, avec une tête d'entrée d'un analyseur, avec une installation destinée à abaisser et à relever l'organe collecteur, au moyen de laquelle l'organe collecteur peut être sélectivement posé par sa surface de contact sur le sol portant le véhicule ou sur la tête d'entrée, et avec des moyens pour changer l'organe collecteur, caractérisé en ce que l'organe collecteur est formé par le tronçon (41) d'un matériau en forme de corde (4), l'installation destinée à abaisser et à relever l'organe collecteur présente au moins un premier moyen de guidage et de transport et un second (10, 11 ; 2) disposés à distance l'un de l'autre, entre lesquels le matériau en forme de corde (4) est maintenu sensiblement étiré et qui permettent d'amener sélectivement le matériau en forme de corde par un déplacement dans son sens longitudinal dans une première position, dans laquelle le tronçon d'extrémité (41) de ce matériau pend du premier moyen de guidage et de transport (10, 11) et repose par sa surface de contact sur le sol (42), et dans une seconde position dans laquelle la surface de contact du tronçon d'extrémité qui a été en contact avec le sol fait face à la tête d'entrée (21), et les moyens pour changer l'organe collecteur comprennent une installation de coupe (30) pour détacher le tronçon d'extrémité (41) utilisé en dernier du matériau en forme de corde (4).

2. Dispositif selon la revendication 1, caractérisé en ce que la tête d'entrée (21) est disposée dans le secteur compris entre les deux moyens de guidage et de transport (10, 11 ; 2).

3. Dispositif selon la revendication 1 ou 2, caractérisé en ce qu'un organe d'appui (27) mobile perpendiculairement à la direction longitudinale du matériau en forme de corde (4) fait face à la tête d'entrée (21) et le matériau en forme de corde (4) est passé entre la tête d'entrée (21) et l'organe d'appui (27).

4. Dispositif selon l'une quelconque des revendications précédentes, caractérisé en ce que le premier moyen de guidage et de transport est formé par deux rouleaux (10, 11) enfermant entre eux le matériau en forme de corde (4), dont l'un au moins est entraîné, et le second moyen de guidage et de transport est formé par un tambour d'alimentation (2) pour le matériau en forme de corde (4).

5. Dispositif selon la revendication 4, caractérisé en ce que le tambour d'alimentation (2) est entraîné en vue d'un maintien en tension du matériau en forme de corde (4).

6. Dispositif selon l'une quelconque des revendications précédentes, caractérisé en ce que les premiers moyens de guidage et de transport (10, 11) au moins se composent d'acier.

7. Dispositif selon l'une quelconque des revendications précédentes, caractérisé en ce que les premiers et seconds moyens de guidage et de transport (10, 11 ; 2) sont disposés sensiblement verticalement l'un au-dessus de l'autre.

8. Dispositif selon l'une quelconque des revendications précédentes, caractérisé en ce que ses composants se trouvent dans un boîtier (1) sous surpression, qui présente une plaque de fond (14) avec une ouverture de sortie (16) pour le matériau en forme de corde (4), et en ce que les premiers moyens de guidage et de transport (10, 11) sont disposés à proximité immédiate de cette ouverture de sortie (16).

9. Dispositif selon l'une quelconque des revendications précédentes, caractérisé en ce qu'il présente au moins deux installations comprenant le matériau en forme de corde (4, 5) et les moyens de guidage et de transport correspondants et la tête d'entrée (21) peut être orientée sélectivement vers l'un ou l'autre des deux matériaux en forme de corde (4, 6).

10. Dispositif selon l'une quelconque des revendications précédentes, caractérisé en ce que le matériau en forme de corde (4) est formé par un tuyau.
